(19) **Europäisches Patentamt / European Patent Office / Office européen des brevets**

(11) **EP 3 441 439 B1**

(12) **EUROPEAN PATENT SPECIFICATION**

(45) Date of publication and mention of the grant of the patent:
**05.02.2020 Bulletin 2020/06**

(21) Application number: **17778898.1**

(22) Date of filing: **28.02.2017**

(51) Int Cl.:
*C09K 3/00* (2006.01)　　　*C08F 220/42* (2006.01)
*C08J 9/32* (2006.01)　　　*C08K 9/10* (2006.01)
*C08L 33/18* (2006.01)　　　*B01J 13/14* (2006.01)

(86) International application number:
**PCT/JP2017/007856**

(87) International publication number:
**WO 2017/175519 (12.10.2017 Gazette 2017/41)**

(54) **MICROSPHERE, THERMALLY FOAMABLE RESIN COMPOSITION, FOAM MOLDED BODY AND MANUFACTURING METHOD FOR SAME**

MIKROKUGEL, THERMISCH SCHÄUMBARE HARZZUSAMMENSETZUNG, SCHAUMFORMKÖRPER UND HERSTELLUNGSVERFAHREN DAFÜR

MICROSPHÈRE, COMPOSITION DE RÉSINE POUVANT FORMER DE LA MOUSSE PAR VOIE THERMIQUE, CORPS MOULÉ EN MOUSSE ET PROCÉDÉ DE FABRICATION POUR CE DERNIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2016 JP 2016076021**

(43) Date of publication of application:
**13.02.2019 Bulletin 2019/07**

(73) Proprietor: **Kureha Corporation**
**Chuo-ku**
**Tokyo 103-8552 (JP)**

(72) Inventors:
- **NOMURA, Shintaro**
  **Tokyo 103-8552 (JP)**
- **ISHIKAWA, Masayuki**
  **Tokyo 103-8552 (JP)**
- **KURIU, Naoko**
  **Tokyo 103-8552 (JP)**
- **ENDO, Shunzo**
  **Tokyo 103-8552 (JP)**
- **SUZUKI, Yasuhiro**
  **Tokyo 103-8552 (JP)**

(74) Representative: **BRP Renaud & Partner mbB**
**Rechtsanwälte Patentanwälte**
**Steuerberater**
**Königstraße 28**
**70173 Stuttgart (DE)**

(56) References cited:
**EP-A1- 1 577 359　　WO-A1-2006/030946**
**WO-A1-2007/072769　　WO-A1-2015/178329**
**WO-A2-2013/178561　　JP-A- 2006 002 133**
**JP-A- 2013 234 255　　JP-A- 2015 129 290**

**Description**

Technical Field

The present invention relates to a microsphere, a heat-expandable resin composition, and a foam molded article and a method for manufacturing the same.

Background Art

A "microsphere," also called a heat-expandable microcapsule, is formed by microencapsulating a volatile foaming agent with an outer shell formed from a polymer, and is typically heat-expandable ("heat-expandable microsphere"). In the manufacture of microspheres, in general, an outer shell is formed so as to encapsulate a foaming agent when the suspension polymerization of a polymerizable monomer and a polymerizable mixture containing the foaming agent is carried out in an aqueous dispersion medium.

In the polymer forming the outer shell, a thermoplastic resin having good gas barrier properties is ordinarily used. The polymer forming the outer shell softens through heating. As for the foaming agent, a low-boiling-point compound such as a hydrocarbon which goes into a gaseous state at a temperature equal to or lower than the softening point of the polymer forming the outer shell is typically used.

When the microspheres are heated, the foaming agent vaporizes and expansion force acts on the outer shell and, at the same time, the elastic modulus of the polymer forming the outer shell decreases rapidly, thereby causing rapid expansion at a certain temperature. This temperature is referred to as the "foaming initiation temperature." When the microspheres are heated to a temperature equal to or higher than this foaming initiation temperature, foamed particles (independent bubbles) are formed due to the above expansion phenomenon, and when the microspheres are further heated, the foaming agent permeates the thinned outer shell and the internal pressure decreases, resulting in shrinking (deflating) of the foamed particles. Note that the temperature at which the volume increase is greatest due to the above expansion phenomenon is called the "maximum foaming temperature."

Utilizing the above characteristic that microspheres form the foamed particles thereof, microspheres are being used in a wide range of fields such as design-imparting materials, functionality-imparting materials, and weight-reducing materials. For example, microspheres are used by being added to polymeric materials such as synthetic resins (thermoplastic resins and thermosetting resins), and rubber, paint, and ink. As higher performance comes to be demanded in each of these fields of application, the demanded performance level for microspheres is also increasing. For example, improvement of processing characteristics such as heat resistance is demanded.

An example of a proposed microsphere having heat resistance that can be used at high temperatures is a microsphere in which the monomer serving as the main component is acrylonitrile (I), a copolymer obtained by polymerizing a monomer (II) containing a carboxyl group and a monomer (III) containing a group that reacts with the carboxyl group of that monomer are used as the outer shell, and the microsphere includes a liquid having a boiling point not higher than the softening temperature of that copolymer (Patent Document 1). A further microsphere and process for producing molded foam is disclosed in Patent Document D2.

Citation List

Patent Literature

Patent Document 1: WO 99/43758
Patent Document 2: EP 1577359 A1

Summary of Invention

Technical Problem

Incidentally, it is demanded that microspheres exhibit narrow foaming behavior. Here, microspheres exhibiting narrow foaming behavior means that they have foaming initiation temperatures which are close each other, and foaming tends to be initiated all at once under foaming temperature conditions. When microspheres do not exhibit narrow foaming behavior, it is disadvantageous in that foaming nonuniformity tends to occur when the microspheres are caused to foam, a uniform foam tends not to be formed, and in that the temperature range during primary processing at a stage prior to causing the microspheres to foam is narrow because foaming may occur expectedly at low temperatures.

Studies by the present inventors proved that it is difficult to achieve both sufficient foaming performance and narrow foaming behavior in known microspheres.

The present invention takes the above problem into consideration, and an object of the present invention is to provide a microsphere that exhibits narrow foaming behavior while maintaining sufficient foaming performance, a heat-expandable resin composition and a foam molded article that includes the same, and a method for manufacturing the above foam molded article.

Solution to Problem

The present inventors discovered that the above problem is solved by adjusting the difference between the foaming initiation temperature of the microsphere and the glass transition temperature of the polymer forming the outer shell of the microsphere to within a prescribed range, and thereby achieved the present invention.

A first aspect of the present invention is a microsphere including an outer shell containing a polymer, and a foaming agent encapsulated inside the outer shell, wherein the microsphere satisfies the relationship (1):

$$20 \leq Ts - Tg \leq 75 \ (°C) \qquad (1)$$

where $Ts$ (°C) represents the foaming initiation temperature of the microsphere, and $Tg$ (°C) represents the glass transition temperature of the polymer.

The above polymer forming the outer shell is a polymer containing a structural unit derived from a vinyl monomer, and comprises a copolymer containing a structural unit derived from methacrylonitrile and a structural unit derived from methacrylic acid as main components, wherein the total content of the structural units derived from methacrylonitrile and the structural units derived from methacrylic acid is from 90 to 100 wt.%, relative to an amount of all structural units derived from vinyl monomers.

The above foaming agent includes from 75 to 100 wt.% of hexane and from 0 to 25 wt.% of another foaming agent.

A second aspect of the present invention is a heat-expandable resin composition containing the above microsphere and one or more types selected from the group consisting of thermoplastic resins, thermosetting resins, and fibers.

A third aspect of the present invention is a foam molded article containing foam particles of the above microsphere and one or more types selected from the group consisting of thermoplastic resins, thermosetting resins, and fibers.

A fourth aspect of the present invention is a method for manufacturing a foam molded article. The method includes heating an unfoamed molded article formed from a heat-expandable resin composition containing the above microsphere and one or more types selected from the group consisting of thermoplastic resins, thermosetting resins, and fibers at a temperature equal to or higher than the foaming initiation temperature of the above microsphere.

Advantageous Effects of Invention

The present invention can provide a microsphere that exhibits narrow foaming behavior while maintaining sufficient foaming performance, a heat-expandable resin composition and a foam molded article that includes the same, and a method for manufacturing the above foam molded article.

Brief Description of the Drawing

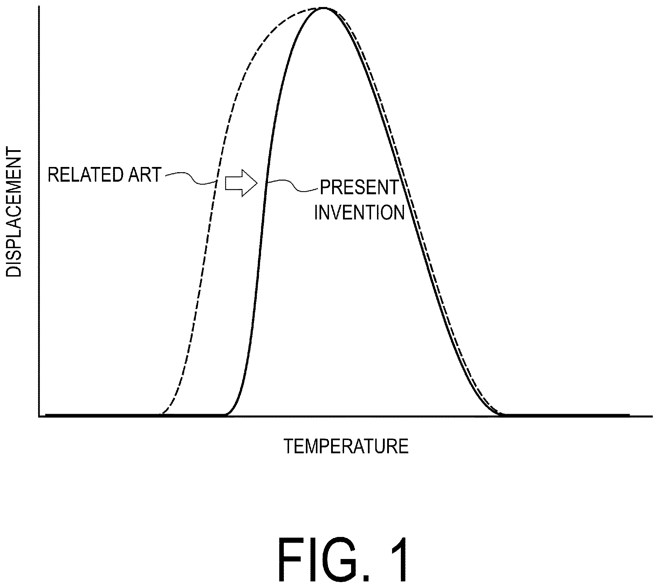

FIG. 1 is a graph schematically comparing the foaming behavior of the microsphere of the present invention and that of a known microsphere.

Description of Embodiments

Microsphere

The microsphere according to the present invention includes an outer shell and a foaming agent encapsulated inside the outer shell and is typically heat-expandable ("heat-expandable microsphere"). The microsphere having such a configuration can generally be produced by suspension-polymerizing one or more types of polymerizable monomer in the presence of a foaming agent in an aqueous dispersion medium containing a dispersion stabilizer.

The microsphere of the present invention satisfies the following relationship (1).

$$20 \leq Ts - Tg \leq 75 \ (°C) \quad (1)$$

(In the above relationship, Ts (°C) represents the foaming initiation temperature of the microsphere, and Tg (°C) represents the glass transition temperature of the polymer.)

The microsphere of the present invention preferably satisfies the relationship $25 \leq Ts - Tg \leq 65$ (°C), and more preferably satisfies the relationship $30 \leq Ts - Tg \leq 55$ (°C).

The above relationship (1) is considered to express that the outer shell softens sufficiently while retaining barrier properties when the vapor pressure at which the foaming agent can foam at temperature Ts is reached, and to reflect a situation in which, as a result, the microsphere foams rapidly when the heating temperature reaches Ts or above and exhibits narrow foaming behavior.

FIG. 1 is a graph schematically comparing the foaming behavior of the microsphere of the present invention and that of a known microsphere. It is understood that with the microsphere of the present invention compared to the known microsphere, the foaming initiation temperature Ts shifted to the high-temperature side without the maximum foaming temperature Tmax substantially changing, and as a result, the foaming behavior became narrow.

In the microsphere of the present invention, the difference (Tmax - Ts) between the maximum foaming temperature Tmax and the foaming initiation temperature Ts is preferably not greater than 40°C, more preferably from 5°C to 35°C, or more preferably from 10°C to 30°C. When Tmax - Ts is within the above range, the foaming behavior of the microsphere tends to be narrower.

Note that in the present invention, the glass transition temperature Tg that is used is the value calculated from the FOX equation using the values listed in Polymer Handbook, J. Brandrup, Interscience, 1989.

The foaming initiation temperature is measured using a thermomechanical analyzer (called "TMA" hereinafter). Specifically, microspheres as a sample are heated at a temperature increasing rate of 5°C/min using a TMA. The foaming initiation temperature in the present invention is the temperature at which height displacement begins when the height displacement of the portion occupied by the sample is continuously measured.

The maximum foaming temperature is measured using a TMA. Specifically, microspheres as a sample are heated at a temperature increasing rate of 5°C/min using a TMA. The foaming initiation temperature in the present invention is the temperature at which height displacement is greatest when the height displacement of the portion occupied by the sample is continuously measured.

(1) Vinyl monomer

Examples of the polymer forming the outer shell include polymers containing a structural unit derived from a vinyl monomer. The polymer comprises a copolymer containing a structural unit derived from methacrylonitrile and a structural unit derived from methacrylic acid as main components (also called "methacrylonitrile/methacrylic acid copolymer" hereinafter) because a microsphere that exhibits narrow foaming behavior while maintaining sufficient foaming performance is readily obtained.

From the perspective of at least one of foamability, gas barrier properties, heat resistance, and solvent resistance, the methacrylonitrile/methacrylic acid copolymer may also contain a structural unit derived from another vinyl monomer. Examples of the other vinyl monomer include nitrile monomers other than methacrylonitrile, such as acrylonitrile, $\alpha$-chloroacrylonitrile, $\alpha$-ethoxyacrylonitrile, and fumaronitrile; vinyl chloride; vinylidene chloride; vinyl acetate; conjugated dienes, such as chloroprene, isoprene, and butadiene; N-substituted maleimides, such as N-phenylmaleimide, N-naphthylmaleimide, N-cyclohexylmaleimide, and methylmaleimide; unsaturated acids other than methacrylic acid, such as acrylic acid, crotonic acid, and anhydrous maleic acid; acrylates such as methyl acrylate, ethyl acrylate, butyl acrylate, and dicyclopentenyl acrylate; methacrylates, such as methyl methacrylate, ethyl methacrylate, butyl methacrylate, and isobornyl methacrylate; and vinyl aromatic compounds, such as styrene, $\alpha$-methyl styrene, and halogenated styrene, and methacrylates are particularly preferred.

In the methacrylonitrile/methacrylic acid copolymer, the content of the structural units derived from methacrylonitrile is preferably from 10 to 90 wt.%, more preferably from 15 to 85 wt.%, or even more preferably from 20 to 80 wt.%, and the content of the structural units derived from methacrylic acid is preferably from 10 to 90 wt.%, more preferably from 15 to 85 wt.%, or even more preferably from 20 to 80 wt.%, relative to the total amount of the structural units derived from methacrylonitrile and the structural units derived from methacrylic acid. When the above contents are within the above ranges, the foaming characteristics of the microsphere are easily adjusted.

In the methacrylonitrile/methacrylic acid copolymer, from the perspective of improving at least one of foamability, gas barrier properties, heat resistance, and solvent resistance while maintaining the object of the present invention, the total content of the structural units derived from methacrylonitrile and structural units derived from methacrylic acid is from 90 to 100 wt.%, more preferably from 90 to 99 wt.%, or even more preferably from 90 to 98 wt.%, and the content of the structural units derived from other vinyl monomers is from 0 to 10 wt.%, more preferably from 1 to 10 wt.%, or even more preferably from 2 to 10 wt.%, relative to the amount of all structural units derived from vinyl monomers.

More specific examples include methacrylonitrile/methacrylic acid copolymers in which the content of the structural units derived from methacrylonitrile is from 10 to 90 wt.% and the content of the structural units derived from methacrylic acid is from 10 to 90 wt.%, relative to the total amount of the structural units derived from methacrylonitrile and the structural units derived from methacrylic acid, the total content of the structural units derived from methacrylonitrile and the structural units derived from methacrylic acid is from 90 to 100%, and the content of the structural units derived from other vinyl monomers is from 0 to 10 wt.%, relative to the amount of all structural units derived from vinyl monomers.

Yet more specific examples include methacrylonitrile/methacrylic acid copolymers in which the content of the structural units derived from methacrylonitrile is from 15 to 85 wt.% and the content of the structural units derived from methacrylic acid is from 15 to 85 wt.%, relative to the total amount of the structural units derived from methacrylonitrile and the structural units derived from methacrylic acid, the total content of the structural units derived from methacrylonitrile and the structural units derived from methacrylic acid is from 90 to 98%, and the content of the structural units derived from other vinyl monomers is from 2 to 10 wt.%, relative to the amount of all structural units derived from vinyl monomers.

Disclosed but not claimed is wherein the polymer forming the outer shell preferably does not contain structural units derived from acrylonitrile from the perspectives of preventing yellowing, preventing unnecessary generation of water-soluble polymers, and the like.

(2) Crosslinkable monomer

In the present invention, the polymer forming the outer shell preferably does not contain structural units derived from crosslinkable monomers as the polymerizable monomer from the perspective of easily obtaining a high foamed article. As the crosslinkable monomer, a polyfunctional compound having two or more polymerizable carbon-carbon double bonds (-C=C-) is exemplified. Examples of the polymerizable carbon-carbon double bonds include vinyl groups, methacryl groups, acryl groups, and allyl groups. The two or more polymerizable carbon-carbon double bonds may be the same or different from each other.

(3) Foaming agent

The foaming agent is a substance that becomes a gas by heating and comprises from 75 to 100 wt% of hexane and from 0 to 25 wt% of another foaming agent. A hydrocarbon or the like having a boiling point corresponding to the foaming initiation temperature may be used as a foaming agent. Examples thereof include hydrocarbons such as methane, ethane, ethylene, propane, propene, n-butane, isobutane, butene, isobutene, n-pentane, isopentane, neopentane, n-hexane, isohexane, n-heptane, isoheptane, n-octane, isooctoane, n-nonane, isononane, n-decane, isodecane, n-dodecane, isododecane, petroleum ethers, and isoparaffin mixtures, and isomer mixtures thereof; chlorofluorocarbons such as $CCl_3F$, $CCl_2F_2$, $CClF_3$, and $CClF_2$-$CClF_2$; and tetraalkylsilanes such as tetramethylsilane, trimethylethylsilane, trimethylisopropylsilane, and trimethyl-n-propylsilane. The foaming agent is hexane alone or a combination of two or more types. Above all, n-hexane is utilised because it exhibits sufficient foaming performance. In addition, a compound that undergoes thermolysis and becomes a gas when heated may also be used as desired.

From the perspectives of obtaining both sufficient foaming performance and narrow foaming behavior, the foaming agent includes from 75 to 100 wt.% of hexane and from 0 to 15 wt.% of other foaming agents, and more preferably includes from 80 to 100 wt.% of hexane and from 0 to 20 wt.% of other foaming agents. Examples of other foaming agents include the foaming agents other than n-hexane exemplified specifically above. Isooctane is preferred from the perspective of achieving both sufficient foaming performance and narrow foaming behavior.

The proportion of foaming agent encapsulated in the microsphere is preferably from 5 to 50 parts by weight, more preferably from 15 to 40 parts by weight, or even more preferably from 20 to 30 parts by weight, relative to 100 parts by weight of polymer forming the outer shell. Thus, the proportions of polymerizable monomer and foaming agent that is used are preferably adjusted such that the outer shell polymer and foaming agent after polymerization are within the above proportions. When the proportion of the foaming agent is within the above range, it is preferred in that the expansion ratio does not tend to become insufficient, in that the thickness of the outer shell does not become too thin, and in that the early foaming and breakage of the outer shell due to shear force incurred under heating during processing tend to be suppressed.

(4) Method for manufacturing microsphere

According to the method for manufacturing the microsphere of the present invention, a microsphere can be produced by suspension-polymerizing one or more types of polymerizable monomer in the presence of a foaming agent in an aqueous dispersion medium containing a dispersion stabilizer. As more specific manufacturing methods, known methods may be used without particular limitation.

(5) Microsphere

The average particle size of the microsphere of the present invention is not particularly limited, and is preferably from 1 to 200 $\mu$m, more preferably from 3 to 150 $\mu$m, or particularly preferably from 5 to 100 $\mu$m. When the average particle size of the microsphere is within the above range, it is preferable in that foamability tends to be sufficient; surface smoothness does not tend to be lost in fields that demand glossy appearance; and resistance to shearing force during processing does not tend to be insufficient.

Heat-expandable resin composition and method for manufacturing thereof

The heat-expandable resin composition according to the present invention contains the above microsphere and one or more types selected from the group consisting of thermoplastic resins, thermosetting resins, and fibers. The thermoplastic resins, thermosetting resins, and fibers may each be used as one type alone or as a combination of two or more types. In the above heat-expandable resin composition, the content of the microspheres is preferably from 10 to 70 parts by weight, more preferably from 20 to 60 parts by weight, or even more preferably from 30 to 50 parts by weight, relative to 100 parts by weight of the one or more types selected from the group consisting of thermoplastic resins, thermosetting resins, and fibers. When the content of the microspheres is within the above range, a foam molded article having a good foaming state tends to be obtained.

Examples of the thermoplastic resins are not particularly limited and include polyvinyl chloride (PVC), polypropylene (PP), ethylene/vinyl acetate copolymer (EVA), thermoplastic elastomer (TPE), ethylene/methyl methacrylate copolymer (EMMA), ethylene/$\alpha$-olefin copolymer (LLDPE), and low density polyethylene (LDPE). Examples of the thermosetting resins include ethylene-propylene-diene rubber (EPDM), silicone rubber, and epoxy resin. Examples of the fibers are not particularly limited and include glass fibers, carbon fibers, metal fibers, pulp fibers, and synthetic fibers.

The method for manufacturing the heat-expandable resin composition according to the present invention includes kneading and heat-treating the microsphere and the one or more types selected from the group consisting of thermoplastic resins, thermosetting resins, and fibers at a temperature lower than the foaming initiation temperature of the microsphere. Examples of the method of kneading and heat treatment are not particularly limited and include extrusion. The specific examples of the extrusion include blending the unheat-treated microsphere with the above one or more types selected from the group consisting of thermoplastic resins, thermosetting resins, and fibers, and creating pellets by extrusion processing at a temperature lower than the foaming initiation temperature of the microsphere.

Foam molded article and method for manufacturing the same

The foam molded article according to the present invention contains foamed particles of the above microsphere and one or more types selected from the group consisting of thermoplastic resins, thermosetting resins, and fibers. The foamed particles are bubbles formed by swelling the microsphere by heating at a temperature not lower than the foaming initiation temperature of the microsphere and are typically independent bubbles. Examples of the thermoplastic resin, thermosetting resin, and fibers are those exemplified specifically above.

The foam molded article according to the present invention is designed as necessary with the objective of weight reduction by foam molding using the above microsphere. The shape of the foam molded article is not particularly limited and may be a sheet shape, a rod shape, a pipe shape, a block shape, or any other shape. The above foam molded article can be advantageously used as a resin molded product for automobiles because it is reduced in weight by using foam molding and has an excellent soundproofing effect and thermal insulation effect.

The method for manufacturing a foam molded article according to the present invention includes heating an unfoamed molded article formed from a heat-expandable resin composition containing the above microsphere and one or more types selected from the group consisting of thermoplastic resins, thermosetting resins, and fibers at a temperature equal to or higher than the foaming initiation temperature of the above microsphere. Here, the above heat-expandable resin composition may be manufactured by, for example, the method described above. Furthermore, the range described above may be employed as the content of the microspheres in the above heat-expandable resin composition.

The foaming initiation temperature of the microsphere may sometimes decrease due to the heating at a temperature lower than the foaming initiation temperature of the microsphere. Thus, in the method for manufacturing a foam molded article according to the present invention, in cases where heat treatment is performed during the manufacture of the heat-expandable resin composition, the foaming initiation temperature of the microsphere is the foaming initiation temperature of the microsphere after that heat treatment.

Examples

The present invention will be described in a further detail below using examples, but the scope of the present invention is not limited to these examples.

Measurement of foaming behavior

The foaming initiation temperature and maximum foaming temperature of examples and comparative examples were measured. Specifically, 0.5 mg of a sample was placed in a container and heated at a temperature increasing rate of 5°C/min using a TMA (model no. TMA/SDTA840, Mettler-Toledo International Inc.), and height displacement of the portion occupied by the sample was continuously measured. The temperature at which the above height displacement started was taken as the foaming initiation temperature (Ts), and the temperature at which the height displacement was greatest was taken as the maximum foaming temperature (Tmax). The height displacement at the point when the height displacement was greatest is called "maximum displacement" hereinafter.

Using the evaluation criteria below, it was determined whether the microspheres foamed sufficiently. The results are shown in Table 1.

Good: When maximum displacement measured by TMA is not less than 500 $\mu$m, it is determined that foaming performance is sufficient.
Poor: When maximum displacement measured by TMA is less than 500 $\mu$m, it is determined that foaming performance is insufficient.

Using the evaluation criteria below, it was determined whether foaming behavior was narrow. The results are shown in Table 1.

Good: When Tmax - Ts is not higher than 40°C, it is determined that foaming behavior is narrow.
Poor: When Tmax - Ts is above 40°C, it is determined that foaming behavior is broad.

Example 1

(1) Preparation of aqueous dispersion medium

An aqueous dispersion medium was prepared by mixing 32.5 g of 20 wt.% colloidal silica, 1.3 g of 50 wt.% diethanolamine-adipic acid condensation product (acid value: 78 mg KOH/g), 0.48 g of sodium nitrite, 89 g of sodium chloride, and 283 g of water. To this aqueous dispersion medium, 5 wt.% hydrochloric acid aqueous solution was added, and the pH was adjusted to 3.5.

(2) Preparation of polymerizable mixture

A polymerizable monomer mixture was prepared by mixing methacrylonitrile (MAN), methacrylic acid (MAA), methyl acrylate (MA), isopentane, isooctane, n-hexane, and isododecane in the weights (g) shown in Table 1 and 1.0 g of 2,2'-azobisisobutyronitrile.

(3) Suspension polymerization

The prepared aqueous dispersion medium and polymerizable mixture were stirred and mixed using a homogenizer to form minute droplets of the polymerizable monomer mixture in the aqueous dispersion medium. The aqueous dispersion medium containing minute droplets of this polymerizable mixture was charged into a polymerization vessel (1.5 L) equipped with an agitator and a reaction was performed by heating at 60°C for 9 hours and then heating at 70°C for another 16 hours using a hot water bath. When 8 hours had elapsed after the start of polymerization, 0.05 g of 3-methacryloxypropyl trimethoxysilane, which is a silane coupling agent having a polymerizable reactive group, was dissolved in 2.0 g of pH 3.5 hydrochloric acid aqueous solution, and this was added to a polymerization vessel (polymerization reaction system). After the polymerization, the slurry containing the produced microspheres was filtered, washed with water, and then dried to obtain the microspheres having an average particle size of 20 $\mu$m.

(4) Evaluation of foaming behavior

The foaming initiation temperature Ts and the maximum foaming temperature Tmax of the obtained microspheres were evaluated by TMA. Note that the glass transition temperature Tg of the polymer forming the outer shell of the microspheres was calculated from the FOX equation using the values listed in Polymer Handbook, J. Brandrup, Interscience, 1989.

[Table 1]

| | Example 1 | Example 2 | Example 3 | Comparative Example 1 | Comparative Example 2 | Comparative Example 3 | Comparative example 4 | Comparative example 5 | Comparative example 6 |
|---|---|---|---|---|---|---|---|---|---|
| Polymerizable monomer | | | | | | | | | |
| MAN | 75 | 65 | 75 | 85 | 75 | 55 | 65 | 75 | 55 |
| MAA | 23 | 33 | 23 | 13 | 23 | 43 | 33 | 23 | 43 |
| MA | 2 | 2 | 2 | 2 | 2 | 2 | 2 | 2 | 2 |
| Foaming agent | | | | | | | | | |
| Isopentane | 0 | 0 | 0 | 0 | 0 | 25 | 25 | 30 | 0 |
| Isooctane | 0 | 0 | 5 | 25 | 25 | 0 | 0 | 0 | 0 |
| Hexane | 25 | 25 | 20 | 0 | 0 | 0 | 0 | 0 | 0 |
| Isododecane | 0 | 0 | 0 | 0 | 0 | 0 | 0 | 0 | 30 |
| Tg | 137 | 146 | 137 | 128 | 137 | 156 | 146 | 137 | 156 |
| Ts (°C) | 182 | 182 | 188 | 227 | 214 | 173 | 158 | 142 | 245 |
| Tmax (°C) | 194 | 210 | 197 | 229 | 230 | 223 | 215 | 198 | 271 |
| Tmax - Ts | 12 | 28 | 9 | 2 | 16 | 50 | 57 | 56 | 26 |
| Ts - Tg | 45 | 36 | 51 | 99 | 77 | 17 | 12 | 5 | 89 |
| Maximum displacement (μm) | 1317 | 1450 | 1073 | 217 | 348 | 2207 | 1258 | 2505 | 94 |
| Foaming performance | Good | Good | Good | Poor | Poor | Good | Good | Good | Poor |
| Foaming behavior | Good | Good | Good | Good | Good | Poor | Poor | Poor | Good |

As is clear from Table 1, the microsphere according to the present invention exhibits narrow foaming behavior while maintaining sufficient foaming performance.

**Claims**

1.   A microsphere comprising an outer shell containing a polymer, and a foaming agent encapsulated inside the outer shell, the microsphere satisfying the relationship (1),

$$20 \leq Ts - Tg \leq 75 \,(°C) \quad (1)$$

where Ts (°C) represents a foaming initiation temperature of the microsphere, wherein the Ts is measured using a thermomechanical analyzer, model no. TMA/SDTA840, Mettler-Toledo International Inc., by heating a container containing 0,5 mg of the microspheres at a temperature increasing rate of 5°C/min wherein height displacement of the portion occupied by the sample was continuously measured and wherein the Ts is the temperature at which height displacement started;
and Tg (°C) represents a glass transition temperature of the polymer, wherein the Tg is the value calculated from the FOX equation using values listed in Polymer Handbook, J. Brandrup, Interscience, 1989; and
wherein the polymer forming the outer shell is a polymer containing a structural unit derived from a vinyl monomer, and comprises a copolymer containing a structural unit derived from methacrylonitrile and a structural unit derived from methacrylic acid as main components, wherein the total content of the structural units derived from methacrylonitrile and the structural units derived from methacrylic acid is from 90 to 100 wt.%, relative to an amount of all structural units derived from vinyl monomers; and
wherein the foaming agent comprises from 75 to 100 wt% of hexane and from 0 to 25 wt% of another foaming agent.

2.   The microsphere according to claim 1, wherein the microsphere comprises an outer shell containing a polymer, and a foaming agent encapsulated inside the outer shell, and satisfies the relationships (1) and (2):

$$20 \leq Ts - Tg \leq 75 \,(°C) \quad (1)$$

where Ts (°C) represents a foaming initiation temperature of the microsphere, and Tg (°C) represents a glass transition temperature of the polymer;

$$Tmax - Ts \leq 40 \,(°C) \quad (2)$$

where Tmax (°C) represents a maximum foaming temperature of the microsphere, and Ts (°C) represents the foaming initiation temperature of the microsphere, wherein the Tmax is measured using a thermomechanical analyzer, model no. TMA/SDTA840, Mettler-Toledo International Inc., by heating a container containing 0.5 mg of the microspheres at a temperature increasing rate of 5°C/min wherein height displacement of the portion occupied by the sample was continuously measured and wherein the Tmax is the temperature at which height displacement was greatest.

3.   The microsphere according to claim 1 or 2, wherein the microsphere satisfies the relationship (100):

$$30 \leq Ts - Tg \leq 55 \,(°C) \quad (100)$$

where Ts (°C) represents a foaming initiation temperature of the microsphere, and Tg (°C) represents a glass transition temperature of the polymer.

4.   The microsphere according to any one of claims 1 to 3, wherein the content of the structural unit derived from methacrylonitrile is from 10 to 90 wt.%, and the content of the structural unit derived from methacrylic acid is from 10 to 90 wt%, relative to the total amount of the structural units derived from methacrylonitrile and structural units derived from methacrylic acid.

5. A heat expandable resin composition comprising the microsphere described in any one of claims 1 to 4 and one or more types selected from the group consisting of thermoplastic resins, thermosetting resins, and fibers.

6. A foam molded article comprising foam particles of the microsphere described in any one of claims 1 to 4 and one or more types selected from the group consisting of thermoplastic resins, thermosetting resins, and fibers.

7. A method for manufacturing a foam molded article, the method comprising heating an unfoamed molded article comprising a heat-expandable resin composition comprising the microsphere described in any one of claims 1 to 4 and one or more types selected from the group consisting of thermoplastic resins, thermosetting resins, and fibers at a temperature equal to or higher than a foaming initiation temperature of the microsphere.

**Patentansprüche**

1. Mikrokugel, umfassend eine Außenhülle, die ein Polymer enthält, und ein in der Außenhülle eingekapseltes Schaummittel, wobei die Mikrokugel die Beziehung (1) erfüllt,

$$20 \leq Ts - Tg \leq 75 \ (°C) \ (1)$$

wobei Ts (°C) eine Schauminitiierungstemperatur der Mikrokugel darstellt, wobei die Ts mit einem thermomechanischen Analysator, Modell-Nr. TMA/SDTA840, Mettler-Toledo International Inc., durch Erwärmen eines 0,5 mg der Mikrokugeln enthaltenden Behälters mit einer Temperaturanstiegsrate von 5 °C/min gemessen wird, wobei die Höhenverlagerung des von der Probe eingenommenen Abschnitts kontinuierlich gemessen wurde und wobei die Ts die Temperatur ist, bei der die Höhenverlagerung begann;
und Tg (°C) eine Glasübergangstemperatur des Polymers darstellt, wobei die Tg der Wert ist, der aus der FOX-Gleichung unter Verwendung von Werten berechnet wird, die im Polymer Handbook, J. Brandrup, Interscience, 1989, aufgeführt sind; und
wobei das Polymer, das die Außenhülle bildet, ein Polymer ist, das eine von einem Vinylmonomer abgeleitete Struktureinheit enthält, und ein Copolymer umfasst, das eine von Methacrylnitril abgeleitete Struktureinheit und eine von Methacrylsäure abgeleitete Struktureinheit als Hauptkomponenten enthält, wobei der Gesamtgehalt der von Methacrylnitril abgeleiteten Struktureinheiten und der von Methacrylsäure abgeleiteten Struktureinheiten 90 bis 100 Gew.-% beträgt, bezogen auf eine Menge aller von Vinylmonomeren abgeleiteten Struktureinheiten; und
wobei das Schaummittel zu 75 bis 100 Gew.-% Hexan und zu 0 bis 25 Gew.-% ein anderes Schaummittel umfasst.

2. Mikrokugel nach Anspruch 1, wobei die Mikrokugel eine Außenhülle, die ein Polymer enthält, und ein in der Außenhülle eingekapseltes Schaummittel umfasst und die Beziehungen (1) und (2) erfüllt:

$$20 \leq Ts - Tg \leq 75 \ (°C) \ (1)$$

wobei Ts (°C) eine Schauminitiierungstemperatur der Mikrokugel darstellt und Tg (°C) eine Glasübergangstemperatur des Polymers darstellt;

$$Tmax - Ts \leq 40 \ (°C) \ (2)$$

wobei Tmax (°C) eine maximale Schaumtemperatur der Mikrokugel darstellt und Ts (°C) die Schauminitiierungstemperatur der Mikrokugel darstellt, wobei die Tmax mit einem thermomechanischen Analysator, Modell-Nr. TMA/SDTA840, Mettler-Toledo International Inc., durch Erwärmen eines 0,5 mg der Mikrokugeln enthaltenden Behälters mit einer Temperaturanstiegsrate von 5 °C/min gemessen wird, wobei die Höhenverlagerung des von der Probe eingenommenen Abschnitts kontinuierlich gemessen wurde und wobei die Tmax die Temperatur ist, bei der die Höhenverlagerung am größten war.

3. Mikrokugel nach Anspruch 1 oder 2, wobei die Mikrokugel die Beziehung (100) erfüllt:

$$30 \leq Ts - Tg \leq 55 \ (°C) \ (100)$$

wobei Ts (°C) eine Schauminitiierungstemperatur der Mikrokugel darstellt und Tg (°C) eine Glasübergangstemperatur des Polymers darstellt.

4. Mikrokugel nach einem der Ansprüche 1 bis 3, wobei der Gehalt der von Methacrylnitril abgeleiteten Struktureinheit 10 bis 90 Gew.-% und der Gehalt der von Methacrylsäure abgeleiteten Struktureinheit 10 bis 90 Gew.-% beträgt, bezogen auf die Gesamtmenge der von Methacrylnitril abgeleiteten Struktureinheiten und von Methacrylsäure abgeleiteten Struktureinheiten.

5. Thermisch ausdehnbare Harzzusammensetzung, umfassend die in einem der Ansprüche 1 bis 4 beschriebene Mikrokugel und einen oder mehrere Typen, ausgewählt aus der Gruppe bestehend aus thermoplastischen Harzen, duroplastischen Harzen und Fasern.

6. Schaumformkörper, umfassend Schaumpartikel der in einem der Ansprüche 1 bis 4 beschriebenen Mikrokugel, und einen oder mehrere Typen, ausgewählt aus der Gruppe bestehend aus thermoplastischen Harzen, duroplastischen Harzen und Fasern.

7. Verfahren zum Herstellen eines Schaumformkörpers, wobei das Verfahren das Erwärmen eines ungeschäumten Formkörpers umfasst, der eine thermisch ausdehnbare Harzzusammensetzung umfasst, die die in einem der Ansprüche 1 bis 4 beschriebene Mikrokugel und einen oder mehrere Typen, ausgewählt aus der Gruppe bestehend aus thermoplastischen Harzen, duroplastischen Harzen und Fasern umfasst, bei einer Temperatur, die gleich oder höher als eine Schauminitiierungstemperatur der Mikrokugel ist.

**Revendications**

1. Microsphère comprenant une enveloppe externe contenant un polymère, et un agent moussant encapsulé à l'intérieur de l'enveloppe externe, la microsphère satisfaisant à la relation (1),

$$20 \leq Ts - Tg \leq 75 \ (°C) \ (1)$$

où Ts (°C) représente une température d'amorçage de moussage de la microsphère, dans laquelle la Ts est mesurée en utilisant un analyseur thermomécanique, modèle n° TMA/SDTA840, Mettler-Toledo International Inc., en chauffant un récipient contenant 0,5 mg des microsphères à une vitesse de montée en température de 5 °C/min dans laquelle un déplacement en hauteur de la partie occupée par l'échantillon a été mesuré en continu et dans laquelle la Ts est la température à laquelle un déplacement en hauteur a démarré ;
et Tg (°C) représente une température de transition vitreuse du polymère, dans laquelle la Tg est la valeur calculée à partir de l'équation de FOX en utilisant des valeurs listées dans Polymer Handbook, J. Brandrup, Interscience, 1989 ; et
dans laquelle le polymère formant l'enveloppe externe est un polymère contenant un motif structural dérivé d'un monomère vinylique, et comprend un copolymère contenant un motif structural dérivé de méthacrylonitrile et un motif structural dérivé d'acide méthacrylique en tant que composants principaux, dans laquelle la teneur totale des motifs structuraux dérivés de méthacrylonitrile et des motifs structuraux dérivés d'acide méthacrylique va de 90 à 100 % en poids, par rapport à une quantité de tous les motifs structuraux dérivés de monomères vinyliques ; et dans laquelle l'agent moussant comprend de 75 à 100 % en poids d'hexane et de 0 à 25 % en poids d'un autre agent moussant.

2. Microsphère selon la revendication 1, dans laquelle la microsphère comprend une enveloppe externe contenant un polymère, et un agent moussant encapsulé à l'intérieur de l'enveloppe externe, et satisfait aux relations (1) et (2) :

$$20 \leq Ts - Tg \leq 75 \ (°C) \ (1)$$

où Ts (°C) représente une température d'amorçage de moussage de la microsphère, et Tg (°C) représente une température de transition vitreuse du polymère ;

$$Tmax - Ts \leq 40 \ (°C) \ (2)$$

où Tmax (°C) représente une température maximale de moussage de la microsphère, et Ts (°C) représente la température d'amorçage de moussage de la microsphère, dans laquelle la Tmax est mesurée en utilisant un analyseur thermomécanique, modèle n° TMA/SDTA840, Mettler-Toledo International Inc., en chauffant un récipient contenant 0,5 mg des microsphères à une vitesse de montée en température de 5 °C/min dans laquelle un déplacement en hauteur de la partie occupée par l'échantillon a été mesuré en continu et dans laquelle la Tmax est la température à laquelle le déplacement en hauteur a été le plus grand.

3. Microsphère selon la revendication 1 ou 2, dans laquelle la microsphère satisfait à la relation (100) :

$$30 \leq Ts - Tg \leq 55 \ (°C) \ (100)$$

où Ts (°C) représente une température d'amorçage de moussage de la microsphère, et Tg (°C) représente une température de transition vitreuse du polymère.

4. Microsphère selon l'une quelconque des revendications 1 à 3, dans laquelle la teneur du motif structural dérivé de méthacrylonitrile va de 10 à 90 % en poids, et la teneur du motif structural dérivé d'acide méthacrylique va de 10 à 90 % en poids, par rapport à la quantité totale des motifs structuraux dérivés de méthacrylonitrile et des motifs structuraux dérivés d'acide méthacrylique.

5. Composition de résine thermo-expansible comprenant la microsphère décrite dans l'une quelconque des revendications 1 à 4 et un ou plusieurs types choisis dans le groupe constitué de résines thermoplastiques, résines thermodurcissables, et fibres.

6. Article moulé en mousse comprenant des particules de mousse de la microsphère décrite dans l'une quelconque des revendications 1 à 4 et un ou plusieurs types choisis dans le groupe constitué de résines thermoplastiques, résines thermodurcissables, et fibres.

7. Procédé de fabrication d'un article moulé en mousse, le procédé comprenant le chauffage d'un article moulé non moussé comprenant une composition de résine thermo-expansible comprenant la microsphère décrite dans l'une quelconque des revendications 1 à 4 et un ou plusieurs types choisis dans le groupe constitué de résines thermoplastiques, résines thermodurcissables, et fibres à une température égale ou supérieure à une température d'amorçage de moussage de la microsphère.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9943758 A

- EP 1577359 A1

**Non-patent literature cited in the description**

- **J. BRANDRUP.** Polymer Handbook. Interscience, 1989